# EUROPEAN PATENT APPLICATION

(11) **EP 2 154 403 A2**
(43) Date of publication of application: **17.02.2010**
(21) Application number: 09010048.8
(22) Date of filing: 04.08.2009
(51) Int. Cl.: F16L 11/08, F16L 11/12, B32B 1/08, B32B 27/00

(54) **Flexible hose having metallized look**

(30) Priority: 05.08.2008 IT VI20080188
(71) Applicant: FITT SPA, 36066 Sandrigo (Vicenza) (IT)
(72) Inventor: Mezzalira, Alessandro, 36066 Ancignano di Sandrigo (VI) (IT)
(74) Representative: Pajola, Stefano

(57) **Abstract**

Flexible hose, particularly a shower or gardening hose, comprising, as viewed from the inside:
- at least one inner supporting layer (4) susceptible of contacting the liquid to be conveyed;
- at least one fibrous reinforcement layer (5) of braided or tricot knitted type;
- at least one outer layer (2);
wherein said at least one inner supporting layer (4) or said at least one outer layer (2) is visible from the outside and has a metallized appearance, said layer visible from the outside being formed of a first thermoplastic polymeric material that includes metal particles (6) embedded in a polymer-based matrix (7).

## Description

### Field of invention

The present invention finds application in the field of flexible hoses, and particularly relates to a flexible hose having a metallized appearance.

The invention further relates to a method of making such flexible hose.

### Background art

Polymeric flexible hoses having an outer layer visible from the outside with a metallized appearance are known in the art. A variety of methods have been used with time to obtain such appearance.

DE-A1-19511216 discloses a flexible hose whose outer layer visible from the outside is formed by painting.

This solution involves increased manufacturing costs as well as management difficulties. Solvents are typically used for painting, after manufacturing of the hose, and this involves difficulties in management and adaptation of plants.

Furthermore, painting shall be inevitably followed by a surface coating treatment to cover the hose with a special transparent film that can preserve the surface metallization treatment for a long time.

Nevertheless, this surface film is characterized by poor adhesion to the underlying painted layer due to natural incompatibility of the plastic material that is used to form the outer covering layer with the underlying surface metallized by painting. This results in a defective hose, with the transparent film peeling off or delaminating from the underlying layer when the hose undergoes the natural bending cycles.

In an attempt to overcome these drawbacks, hoses have been provided whose outer layer visible from the outside is formed by hot coating of the supporting layer with a thin metal foil.

Patent US 5,555,913 and Patent Application US 2006070780 disclose hoses having the outer visible from the outside metallized layer formed with such method.

Nevertheless, this prior art solution also suffers from the drawback of inadequate adhesion of the thin metal foil to the supporting layer and/or the covering layer that may lead with time to structural collapse of the hose.

Also, this hose involves a rather difficult and complex fabrication process, due to the inevitable mechanical and process complications associated with hot stamping. This also increases hose manufacturing costs.

### Disclosure of the invention

The object of the present invention is to overcome the above drawbacks, by providing a flexible hose with a metallized appearance that can be manufactured in a simple, cost-effective manner.

A particular object is to provide a long-life hose with metallized appearance.

These and other objects, as better explained hereafter, are fulfilled by a hose as defined in claim 1.

With this particular configuration, the hose of the invention will preserve the metallized appearance of the layer visible from the outside with time, because the metal particles are embedded in the polymer matrix. This will prevent the prior art metal foil peel-off drawbacks.

Furthermore, the hose of the invention can be manufactured in a particularly simple, cost-effective manner, because the metallization of the layer visible from the outside is obtained by dispersion of metal particles in the polymer-based matrix, which is a much simpler step than painting and/or hot stamping.

Also such simplicity results in a lower cost of the finished hose, as compared with prior art hoses.

As used herein, the term "polymer-based matrix" or derivatives thereof, shall be intended to indicate a polymeric material that can provide the molecular structure of the final product.

Conveniently, the polymer-based matrix may be a matrix based on a material selected from the group comprising polyvinylchloride, possibly of plasticized type (PVC, P-PVC), polyethylene (PE), polypropylene (PP), polystyrene (PS), high-impact polystyrene (HIPS), styrene acrylonitrile (SAN), polycarbonate (PC), polyamide (PA), polyethylene terephthalate (PET), polyoxymethylene (POM).

As used herein, the term "-based matrix" or derivatives thereof, preceded by the name of a polymer material, shall be intended to indicate a polymer material capable of providing the molecular structure of the polymer material whose name precedes the term "-based matrix" to the final product.

In a first embodiment, the layer visible from the outside with metallized appearance may be the inner layer. The outer layer is optically transparent to allow viewing of the metallized appearance of the inner layer.

In a second embodiment, the layer visible from the outside with metallized appearance may be the outer layer.

In this case, an optically transparent protective layer may be laid thereupon.

Suitably, the supporting layer underlying the outer layer may be formed of a third thermoplastic material, compatible with the first material that constitutes the layer with the metallized appearance.

These features will prevent the poor layer adhesion drawbacks of the prior art.

It shall be understood that the above supporting layer may be located below the layer with the metallized appearance, either in contact with the latter or not.

As used herein, the term "compatible materials" or derivatives thereof shall be intended to indicate materials having a chemical and/or physical compatibility with each other, i.e. materials that, while in joined relationship, provide a junction adapted to support the transfer of tensile or shear stresses through the contact surface. The highest compatibility is thus achieved between identical materials or having the same nature.

In a further aspect, the invention relates to a method of making the flexible hose as defined in claim 12.

As used herein, the term "provision" or derivatives thereof, designate the preparation of a relevant component for a relevant process step, including any preventive treatment designed for optimal performance of such relevant step, from simple collection and possible storage to purification, addition of additives, and thermal and/or chemical and/or physical pre-treatments or the like.

Advantageous embodiments of the invention are defined in accordance with the dependent claims.

### Brief description of the drawings

Further features and advantages of the invention will be more apparent upon reading the detailed description of a preferred, non-exclusive embodiment of a flexible hose according to the invention, which is described as a non-limiting example with the help of the annexed drawings, in which:
FIG. 1 is a cross-sectional view of one embodiment of the flexible hose of the invention;
FIG. 2 is an enlarged view of certain details of FIG. 1;
FIG. 3 is a diagrammatic view of one embodiment of the a plant for making the hose of the invention.

### Detailed description of a preferred embodiment

The hose 1, that may be composed of three or more layers, preferably all formed of a polymeric material, may be advantageously used, depending on its configuration, as a gardening hose or a shower hose. The hose 1 may also be of spiral type.

The flexible hose 1 may essentially comprise, as viewed from the inside, an inner supporting layer 4, which may be susceptible of contacting the liquid to be conveyed, for instance water, a fibrous reinforcement layer of braided or tricot knitted type, and an outer layer.

One of the inner supporting layer 4 and the outer layer 2 is visible from the outside and has a metallized appearance.

In a first embodiment of the invention, the layer visible from the outside with the metallized appearance may be the inner supporting layer 4, with the outer layer 2 being optically transparent, allowing a user to appreciate the underlying metallization. Also, in this case, the reinforcement layer 5 may have a sufficiently large gap between the yarns of the braid or the tricot knitting chains, so that the topside of the inner layer 4 with the metallized appearance is not wholly covered.

In a second embodiment of the invention, the layer visible from the outside with the metallized appearance may be the outer supporting layer 2, like in the embodiment that is shown by way of example and without limitation in the annexed figures. In this case, such outer layer 2 may be the outermost layer of the hose 1 or it may be protected with an optically transparent protective film 3.

In any case, the layer visible from the outside with the metallized appearance, whether it is the outer layer 4 or the inner layer 2, may be formed of a first thermoplastic polymeric material that includes metal particles 6 embedded in a polymer-based matrix 7.

While the following detailed features relate to the embodiment of the hose 1 in which the layer visible from the outside is the outer layer 3, they shall be also intended to relate to the embodiment of the hose 1 in which the layer visible from the outside with metallized appearance is the inner layer 4.

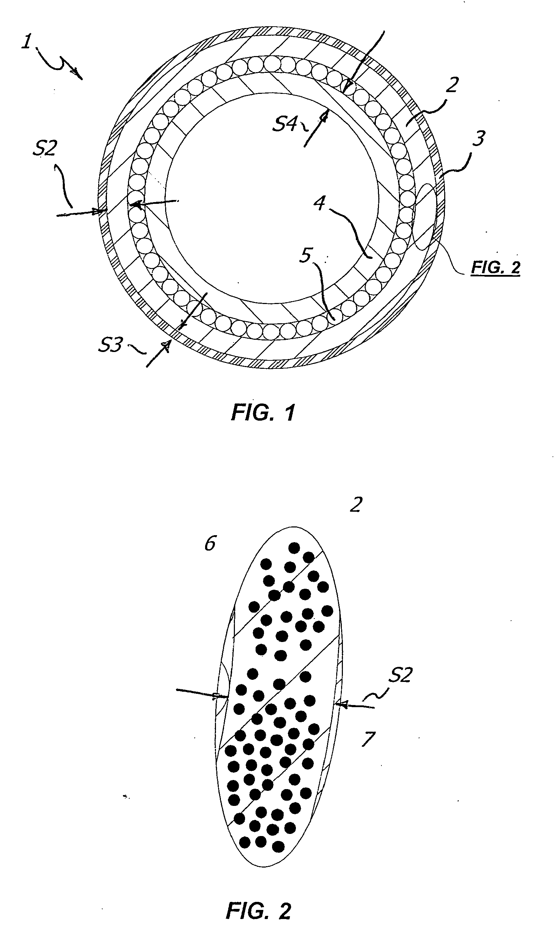

The embodiment of Figure 1 is a flexible hose that comprises an outer layer with a metallized appearance 2, a protective layer 3 lying over the layer 2, an inner supporting layer 4 underlying the outer layer 2 and a fibrous layer 5 interposed between the layers 2 and 4.

The fibrous layer 5 may be tricot knitted, as is preferred for gardening hoses, or braided, for shower hoses.

The layer with the metallized appearance 2 may be formed of a first thermoplastic polymeric material including metal, particularly aluminum particles 6, embedded in a polymer-, preferably plasticized PVC-based matrix 7.

Advantageously, the metal particles 6 may be of food grade quality.

While reference will be always made hereinafter to a plasticized PVC-based matrix, which is particularly suitable for the hose of the invention, it shall be understood that the hose may be also formed of other polymeric materials having an adequate ability of dispersing metal particles, without departure from the scope as defined by the accompanying claims.

Particularly, the polymer-based matrix may be a matrix based on a first material selected from the group comprising polyvinylchloride, possibly of plasticized type (PVC, P-PVC), polyethylene (PE), polypropylene (PP), polystyrene (PS), high-impact polystyrene (HIPS), styrene acrylonitrile (SAN), polycarbonate (PC), polyamide (PA), polyethylene terephthalate (PET), polyoxymethylene (POM).

As shown in Figure 2, the metal particles 6 may be embedded or incorporated in the PVC-based matrix 7 substantially throughout the thickness S₂ of the layer with the metallized appearance 2, so that such chromatic aspect extends to substantially the whole layer 2 and not to its surface only.

Conveniently, the first thermoplastic material of the metallized layer 2 may further include at least one plasticizing agent.

In a preferred, non limiting embodiment, the first material of the metallized layer 2 may include 45% to 70% PVC, 25% to 45% plasticizer and 0.5% to 4% metal particles.

The amounts as used herein shall be intended as percentages based on the total weight of the material.

Furthermore, the metal particles 6 preferably represent from 1% to 3%, more preferably about 1.5% of the first polymeric material of the layer with the metallized appearance 2. These percentages shall be intended by weight, based on the weight of the first polymeric material.

Advantageously, the metal particles 6 may be in the form of flakes, preferably of lenticular shape and may conveniently have a particle size of less than 100 100 µm, preferably from 40 µm to 80 µm.

These features optimize the reflectance or glitter effect of the metallization of the layer 2.

The layer 3 that overlies the one with the metallized appearance 2 may be optically transparent, to allow a user to appreciate the metallized appearance of the underlying layer 2.

The layer 3 may be optically transparent throughout its length or in certain partial areas thereof, which will hence define one or more optically transparent windows of any configuration and/or size, through which the metallized appearance of the underlying layer 2.

Otherwise, the layer with metallized appearance 2 may be the outermost layer of the hose 1, so that a user may directly appreciate its metallized appearance.

As used herein, the term "layer visible from the outside" or the like is intended to designate a layer, at least the topside whereof is externally visible by the naked eye of a user.

For example, as anticipated above, for the layer with metallized appearance 2 to be "visible from the outside", it may be the outermost layer of the hose 1 or it may be covered with one or more optically transparent layers, throughout its surface or at certain partial areas thereof.

As used herein, the term "optically transparent layer" or the like is intended to indicate a layer that allows at least partial light passage so that, when it lies partially or totally over another layer, at least the topside of the underlying layer may be externally seen by the naked eye of a user.

Furthermore, the optically transparent layer 3 may be pigmented or not, and may or may not alter the original pigmentation of the underlying layer with the metallized appearance. In a preferred, non limiting embodiment, the layer with the metallized appearance 2 may be suitably pigmented, and the optically transparent layer 3 may be neutral or not pigmented.

The optically transparent layer 3 may directly overlie the layer with the metallized appearance 2 to protect the latter from scratches or contacts that might remove the surface metal particles 6.

Advantageously, the optically transparent layer 2 may be formed of a second thermoplastic material, whereas the supporting layer 4 may be formed of a third thermoplastic material.

In a preferred non limiting embodiment, the second and third thermopolastic materials, that form the optically transparent layer 3 and the supporting layer 4 respectively, may be similar, e.g. plasticized PVC,

Conveniently, the second and/or third thermoplastic materials that form the optically transparent layer 3 and/or the supporting layer 4 respectively may be compatible with the first thermoplastic material that forms the layer with metallized appearance 2, so that chemical and/or physical continuity is ensured between the layers, and the hose so formed can have a long life, even when it undergoes repeated bending cycles.

The layer with metallized appearance 2 may have a thickness S₂ of more than 0.4 mm, preferably from 0.5 mm to 1.3 mm.

On the other hand, the optically transparent layer 3 may be a film or foil having a thickness S₃ of 0.25 to 0.4 mm, whereas the supporting layer may have a thickness S₄ of 0.5 mm to 1.5 mm.

As used herein, the terms "film" and/or "foil" and derivatives thereof are intended to designate a layer whose thickness is less than 0.4 mm. Thus, the layer with metallized appearance 2 is not a film or foil, whereas the optically transparent layer 3 is a film or foil.

Advantageously, the first material that constitutes the layer with metallized appearance 2 and/or the second material that constitutes the optically transparent layer 3 may have a hardness of 60 Sh A to 80 Sh A, preferably of about 70 Sh A, whereas the third material that constitutes the supporting layer 4 may have a hardness of 70 Sh A to 90 Sh A, preferably of about 80 Sh A.

This affords an optimized ratio of flexibility to structural resistance of the hose.

The flexible hose of the invention may be fabricated by a process that generally comprises a first step in which the inner layer 4 is formed, by introducing the above third polymeric material into a processing station 15 in which such material is melted and extruded to form the supporting layer 4.

The latter may in turn move to a workstation 16 in which the fibrous layer 5 is laid onto its outer surface by braiding and/or knitting, as is well known to those skilled in the art.

In a particularly preferred embodiment, the reinforcement layer 5 may be of the tricot knitted type, and be formed in accordance with the teachings of patents EP-B1-0623776 or EP-B1-0960297, by the Applicant hereof.

Particularly, the fabric reinforcement layer 5 may be formed as taught by Italian Patent IT270776, with knitted fabric reinforcement layers spirally wound on the supporting layer with tricot knits in parallel lines and rows and with opposite inclinations.

This will provide a semifinished product 14.

Then, the first thermoplastic material will be provided and extruded to form the layer with the metallized appearance 3 on the semifinished product 14.

The first thermoplastic material that constitutes the layer with the metallized appearance 2 may be formed by mixing of the particles 6 and the PVC-based matrix 7, preferably with a cold or dry-blending process.

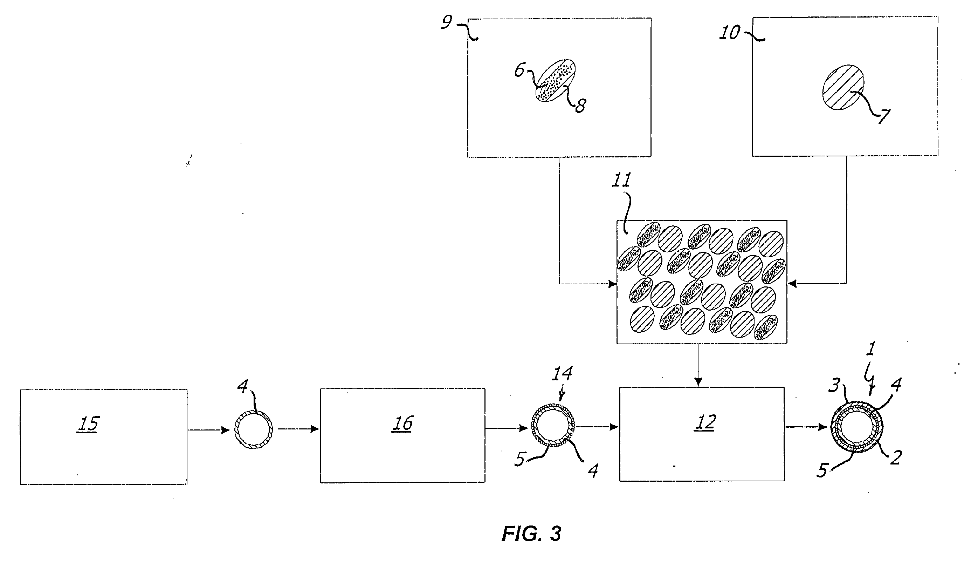

A diagrammatic view of one embodiment of a plant for manufacturing the hose of the invention, which implements the method of making the hose, is shown in Figure 3.

Here, the metal particles 6 may be incorporated in a masterbatch 8, that will act as a carrier therefor, and will be preferably stored, e.g. in cold and/or granule form, in a first container 9, which is separated from a second container 10 susceptible of containing the PVC-based matrix 7, e.g. in granules.

Advantageously, the masterbatch 8 may preferably include 60% to 90%, preferably 70% metal particles and 20% to 40%, preferably 30% of a fourth thermoplastic polymeric material that may be compatible with the material that constitutes the PVC-based matrix 7. Preferably, the fourth polymeric material will be based on polyolefins and EVA (Ethyl-Vinyl Acetate).

Advantageously, the fourth polymeric material may further include one or more compounds capable of creating a chemical bridge between the inorganic molecules of the metal particles 6 and the organic PVC-based matrix 7, for optimum dispersion. Preferably, these compounds may be of maleicate type.

The PVC-based matrix 7 may include 45% to 65%, preferably 55% PVC having a K factor of 50 to 100, preferably about 70, and 30% to 50%, preferably 40%, plasticizers.

Then, the PVC matrix 7 and the masterbatch 8 may be transferred to a mixing station 11, where they will be mixed by a cold mix or dry-blending procedure, to obtain a dry mixture having the same composition as the above mentioned first polymeric material.

Now, the mixture so obtained may be transferred to a workstation 12, in which it will be melted and the first melted polymeric material will be extruded into a tubular form to obtain the layer with the metallized appearance 2.

The latter may in turn be coextruded with the optically transparent layer 3 onto the semifonished product 14, which may include the fibrous layer 5 and supporting layer 4, as particularly shown in Figure 3.

The semifinished product 14 will exit from the workstation 16 and move to the workstation 12, in which both the layer with the metallized appearance 2 and the optically transparent layer 3 will be coextruded on its outer surface.

For this purpose, the coextrusion station 12 may be fed with both the first material that constitutes the layer with the metallized appearance 2 and with the second material, that will melt and form the optically transparent layer 3. The coextrusion station 12 will thus provide the finished flexible hose 1.

Otherwise, the workstation 12 may provide a semifinished product composed of the supporting layer 4, the fibrous layer 5 and the layer with the metallized appearance 2, with the latter being possibly inserted in a subsequent extrusion station which may be in turn fed with the above second polymeric material, that will be melted and extruded therein to form the optically transparent layer 3.

The above disclosure shows that the invention fulfills the intended objects and particularly meets the requirement of providing a flexible hose having a metallized appearance that may be fabricated in a simple and cost-effective manner.

Furthermore, due to the high compatibility between the materials in use, the flexible hose having a metallized appearance can withstand the most demanding bending cycles without collapsing, thereby ensuring a long life.

The flexible hose of this invention is susceptible of a number of changes and variants, within the inventive concept as disclosed in the appended claims. All the details may be replaced by other technically equivalent elements, and the materials may be different depending on different needs.

## Claims

1. Flexible hose, particularly a shower or gardening hose, comprising, as viewed from the inside:
- at least one inner supporting layer (4) susceptible of contacting the liquid to be conveyed;
- at least one fibrous reinforcement layer (5) of braided or tricot knitted type;
- at least one outer layer (2);
wherein said at least one inner supporting layer (4) or said at least one outer layer (2) is visible from the outside and has a metallized appearance, said layer visible from the outside being formed of a first thermoplastic polymeric material that includes metal particles (6) embedded in a polymer-based matrix (7).

2. Flexible hose as claimed in claim 1, wherein said polymeric base (3) of said matrix includes a first material selected from the group comprising polyvinylchloride, possibly of plasticized type, polyethylene, polypropylene, polystyrene, high-impact polystyrene, styrene acrylonitrile, polycarbonate, polyamide, polyethylene terephthalate, polyoxymethylene.

3. Flexible hose as claimed in claim 1 or 2, wherein said metal particles (6) are in the form of flakes having a particle size of less than 100 µm, and preferably of 40 µm to 80 µm.

4. Flexible hose as claimed in one or more of the preceding claims, wherein said layer visible from the outside with a metallized appearance has a thickness (S₂) of more than 0.4 mm, and preferably of 0.5 mm to 1.3 mm.

5. Flexible hose as claimed in one or more of the preceding claims, wherein said metal particles (6) represent in said first polymeric material a weight percentage of more than 1%, preferably from 1% to 3%, and more preferably about 1.5% based on the total weight of the first polymeric material.

6. Flexible hose as claimed in one or more of the preceding claims, wherein said supporting layer (4) is formed of a third thermoplastic polymeric material compatible with said first material that in which said at least one outer layer (2) is formed.

7. Flexible hose as claimed in one or more of the preceding claims, wherein said layer visible from the outside with a metallized appearance is said inner layer (4), said outer layer (2) being optically transparent.

8. Flexible hose as claimed in one or more of the preceding claims, wherein said layer visible from the outside with a metallized appearance is said outer layer (2).

9. Flexible hose as claimed in claim 8, wherein at least one optically transparent protective layer (3) is provided over said at least one outer layer (2).

10. Flexible hose as claimed in claim 9, wherein said at least one optically transparent layer (3) is formed of a second thermoplastic polymeric material compatible with said first material that constitutes said at least one outer layer with metallized appearance (2).

11. Flexible hose as claimed in one or more of the preceding claims, wherein said first material and/or said second material have a hardness of 60 Sh A and 80 Sh A, preferably about 70 Sh A, said third material having a hardness of 70 Sh A to 90 Sh A, preferably about 80 Sh A.

12. A process for preparing a flexible hose as claimed in one or more of the preceding claims, comprising the steps of:
- forming an inner tubular supporting layer (4);
- forming at least one fibrous reinforcement layer (5) of braided or tricot knitted type on said at least one tubular inner supporting layer (4) to obtain a semifinished product (14);
- forming an outer tubular layer (2) upon said semifinished product;
wherein said inner supporting layer (4) or said outer layer (2) is visible from the outside and has a metallized appearance, said layer visible from the outside with metallized appearance being formed by extrusion of a first thermoplastic polymeric material that includes metal particles (6) embedded in a polymer-based matrix (7).

13. A process as claimed in the preceding claim, comprising a step of provision of said first thermoplastic material that includes a cold mixing step for mixing said metal particles (6) and said polymer-base matrix (7).
